# FASCICULE DE BREVET EUROPEEN

(11) **EP 4 172 499 B1**
(45) Date de publication et mention de la délivrance du brevet: **02.04.2025**
(21) Numéro de dépôt: 21735681.5
(22) Date de dépôt: 23.06.2021
(51) Int. Cl.: F03G 3/00

(54) **EQUIPEMENT POUR RESEAU ELECTRIQUE, ADAPTE AU STOCKAGE D'ENERGIE SOUS FORME D'ENERGIE POTENTIELLE DE PESANTEUR**
VORRICHTUNG FÜR ELEKTRISCHE NETZWERKE, WOBEI DIE VORRICHTUNG ZUR SPEICHERUNG VON ENERGIE IN FORM VON GRAVITATIONSPOTENTIALENERGIE GEEIGNET IST
APPARATUS FOR ELECTRICAL NETWORKS, WHICH APPARATUS IS SUITABLE FOR STORING ENERGY IN THE FORM OF GRAVITATIONAL POTENTIAL ENERGY

(30) Priorité: 24.06.2020 FR 2006618
(43) Date de publication de la demande: 03.05.2023
(73) Titulaire: Philippe, Stéphane, Pas de la Case (AD)
(72) Inventeur: PITOUX, Jacques, Dubaï (AE); PITOUX, Michel, Dubaï (AE); DURET, Pierrick, Dubaï (AE)
(74) Mandataire: Jacobacci Coralis Harle
(86) Numéro de dépôt international: PCT/EP2021/067215
(87) Numéro de publication internationale: WO 2021/260045

(56) Documents cités:
- WO-A1-2019/197762
- CN-A- 105 275 755

## Description

### Domaine technique de l'invention

La présente invention concerne, de manière générale, le domaine des équipements pour les réseaux électriques.

Elle concerne plus particulièrement les équipements pour les réseaux électriques qui sont adaptés, d'une part, au stockage d'énergie sous forme d'énergie potentielle de pesanteur et, d'autre part, à la restitution de cette énergie potentielle de pesanteur sous la forme d'énergie électrique.

### Etat de la technique

Le stockage de l'énergie consiste à mettre en réserve une quantité d'énergie en un lieu donné, sous une forme aisément utilisable, pour une utilisation ultérieure.

Un tel stockage d'énergie est particulièrement intéressant pour valoriser avec efficacité les énergies alternatives, telles que l'énergie éolienne et l'énergie solaire.

En effet, ces sources d'énergie sont sûres et renouvelables, mais elles présentent l'inconvénient de générer une production de manière intermittente.

Parmi les techniques de stockage, l'énergie peut être emmagasinée sous la forme d'énergie potentielle de pesanteur.

A cet effet, il est par exemple connu d'utiliser un équipement comportant une ou plusieurs masses solides, montée(s) sur une roue tournant autour d'un axe horizontal, dont la position peut varier selon un gradient de hauteur. Un tel équipement peut ensuite restituer l'énergie potentielle de pesanteur sous la forme d'énergie électrique.

Dans ce cadre, il peut s'avérer intéressant de produire de l'énergie électrique à un moment donné, avec un rendement intéressant, sans besoin de l'utiliser tout de suite, et de stocker cette énergie en vue d'une utilisation ultérieure.

Le document WO2019197762 décrit un équipement pour réseau électrique, adapté au stockage d'énergie sous forme d'énergie potentielle de pesanteur, qui comprend :
(i) une masse solide portée par un arbre rotatif présentant un axe de rotation horizontal et destinée à osciller entre deux positions de fin de course qui se situent de part et d'autre d'un plan vertical passant par ledit axe de rotation horizontal,
(ii) des premiers moyens générateurs d'énergie, comprenant un rotor entraîné en rotation par ledit arbre rotatif pour la production d'énergie électrique,
(iii) des moyens d'impulsion, coopérant avec la masse solide pour participer à son maintien en oscillation entre lesdites deux positions de fin de course, et
(iv) des moyens de commande pour le pilotage des moyens d'impulsion.

Le principe de fonctionnement de cet équipement repose sur une oscillation de la masse solide entre des moyens d'impulsion.

Toutefois, les équipements actuels de ce type ne sont pas totalement satisfaisants, notamment du fait de l'encombrement nécessaire au déplacement des masses solides et du fait des rendements considérés comme limités ou insuffisants.

Il existe ainsi un besoin de nouveaux équipements pour les réseaux électriques qui sont adaptés à stocker, et à restituer, l'énergie potentielle de pesanteur de manière efficace et dans un encombrement réduit.

### Présentation de l'invention

Afin de remédier à l'inconvénient précité de l'état de la technique, la présente invention propose un nouvel équipement pour les réseaux électriques qui est adapté à stocker, et à restituer, l'énergie potentielle de pesanteur de manière efficace et dans un encombrement réduit. En particulier cet équipement utilise un minimum d'énergie pour assurer son entraînement en rotation.

Plus particulièrement, on propose selon l'invention un équipement pour réseau électrique, adapté au stockage d'énergie sous forme d'énergie potentielle de pesanteur et à la restitution de ladite énergie potentielle de pesanteur sous la forme d'énergie électrique,
lequel équipement comprend :
   - une structure de roue munie d'un arbre rotatif présentant un axe de rotation horizontal,
   - des moyens pour la mise en rotation de ladite structure de roue autour dudit axe de rotation horizontal, lesquels moyens comprennent (i) au moins une masse pesante portée par ladite structure de roue de manière adaptée pour assurer son déséquilibrage par rapport audit axe de rotation, et (ii) une motorisation de manoeuvre de roue associée à des moyens de transmission,
   - une génératrice électrique comprenant un rotor entrainé en rotation par ledit arbre rotatif, pour la production d'énergie électrique à partir de la rotation de ladite structure de roue et,
   - des moyens d'accumulation d'énergie électrique, en forme d'une ou de plusieurs batteries, qui sont alimentés en électricité par ladite génératrice électrique,
cet équipement étant caractérisé par le fait que lesdits moyens pour la mise en rotation de ladite structure de roue sont adaptés pour mettre en rotation ladite structure de roue toujours dans le même sens de rotation.

D'autres caractéristiques non limitatives et avantageuses de l'équipement conforme à l'invention, prises individuellement ou selon toutes les combinaisons techniquement possibles, sont les suivantes :
- ladite au moins une masse pesante consiste en une masse pesante unique ;
- ladite au moins une masse pesante est montée fixe sur ladite structure de roue ;
- ladite structure de roue comporte une zone de périphérie située à distance dudit axe de rotation horizontal, et ladite au moins une masse pesante est montée fixe au niveau de ladite zone de périphérie ;
- ladite structure de roue est de forme générale cylindrique et comporte un carénage périphérique adapté pour minimiser les frottements à l'air ;
- ladite structure de roue comprend un bras s'étendant radialement par rapport audit arbre rotatif, et à l'extrémité distale duquel ladite au moins une masse pesante est montée fixe ;
- ladite motorisation de manœuvre de roue est de type électrique, et lesdits moyens d'accumulation d'énergie électrique sont adaptés pour servir au moins partiellement de moyen d'alimentation électrique pour ladite motorisation de manœuvre de roue ;
- l'équipement comporte des moyens de commande adaptés pour la mise en marche et l'arrêt de ladite motorisation de manœuvre de roue en fonction de la charge desdits moyens d'accumulation d'énergie électrique ;
- l'équipement comporte des moyens de commande de ladite motorisation de manœuvre de roue adaptés pour mettre à l'arrêt ladite structure de roue en positionnant ladite au moins une masse pesante en partie supérieure de ladite structure de roue, à la verticale ou sensiblement à la verticale de l'axe de rotation de ladite structure de roue, afin de faciliter sa mise en rotation du fait de la gravité ;

La présente invention concerne encore un procédé pour animer en rotation un équipement tel que défini ci-dessus, lequel procédé consiste :
- à mettre à l'arrêt ladite structure de roue en positionnant ladite au moins une masse pesante en partie supérieure de ladite structure de roue, à la verticale ou sensiblement à la verticale de l'axe de rotation de ladite structure de roue, afin de faciliter sa mise en rotation du fait de la gravité, et
- à mettre en marche de ladite motorisation de manoeuvre de roue pour entrainer ladite structure de roue en rotation.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue schématique en perspective d'une première forme de réalisation possible d'un équipement conforme à l'invention ;
[Fig. 2] est une vue en coupe verticale sur l'axe de rotation de la structure de roue de l'équipement selon l'invention illustré sur la figure 1 ;
[Fig. 3] est une vue schématique d'une deuxième forme de réalisation possible d'un équipement conforme à l'invention, vu en perspective.

Il est à noter que, sur ces figures, les éléments structurels et/ou fonctionnels communs aux différentes variantes peuvent présenter les mêmes références.

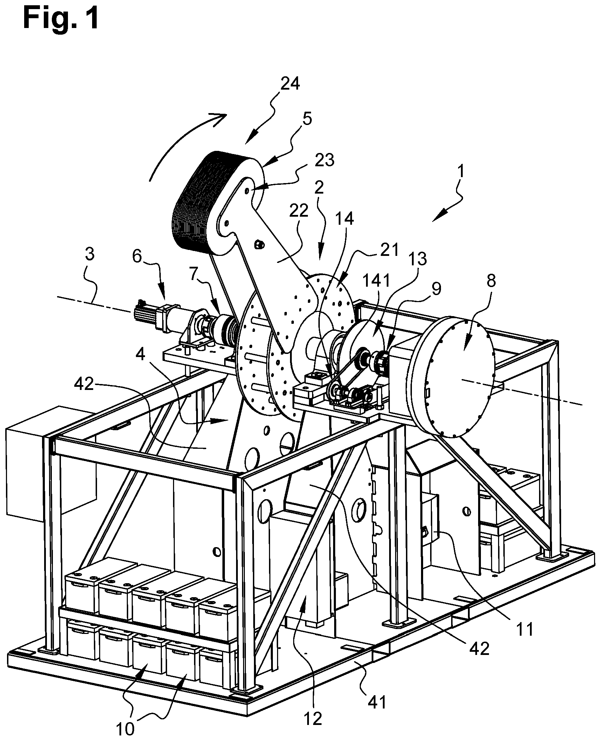

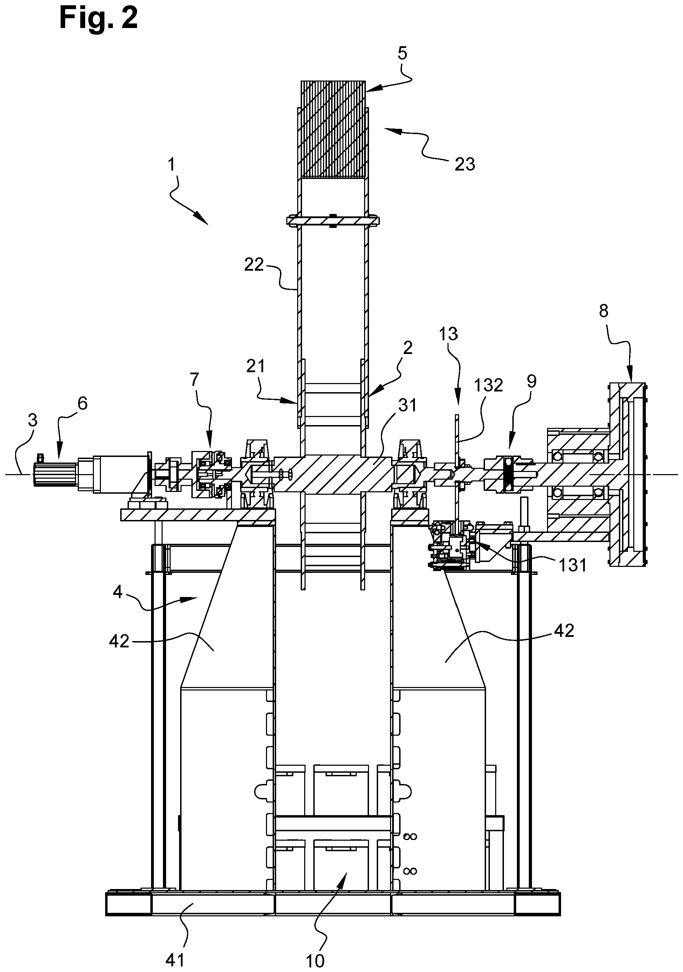

On a représenté sur les figures 1 et 2 un premier mode de réalisation d'un équipement conforme à l'invention, adapté au stockage d'énergie sous forme d'énergie potentielle de pesanteur et à la restitution de ladite énergie potentielle de pesanteur sous la forme d'énergie électrique.

Cet équipement 1 comprend une structure de roue 2 munie d'un axe de rotation horizontal 3 (matérialisé par un arbre de roue 31) porté par un support 4, laquelle structure de roue 2 est associée à des moyens pour sa mise en rotation autour dudit axe horizontal 3, constitués :
- d'une masse pesante 5 portée par la structure de roue 2 de manière adaptée pour assurer son déséquilibrage par rapport à son axe de rotation 3, et
- d'une motorisation de manoeuvre de roue 6 associée à des moyens de transmission 7.

Ces moyens 5, 6 de mise en rotation sont adaptés pour mettre en rotation la structure de roue 2 toujours dans le même sens de rotation (repéré par une flèche d'orientation sur la figure 1).

Le mouvement de rotation de la structure de roue 2 est transmis à une génératrice électrique 8 par des moyens de transmission 9. L'énergie électrique produite par la génératrice électrique 8 est stockée dans des moyens d'accumulation d'énergie électrique 10 (formés ici par un ensemble de batteries) par l'intermédiaire d'un régulateur de charge 11, avant d'être transformée en courant alternatif, via un onduleur-convertisseur classique 12 (par exemple du type 230 VAC), pour toute utilisation désirée.

Le support 4 de la roue 2 se présente sous la forme d'un socle 41 à partir duquel s'étendent vers le haut deux poutres verticales 42 parallèles.

La structure de roue 2 est placée entre les deux poutres verticales 42.

Dans leur partie supérieure, ces deux poutres 42 portent l'arbre de roue 31, par l'intermédiaire de roulements.

La structure de roue 2 comprend un châssis mécano-soudé 21 de forme générale cylindrique, à partir duquel s'étend un bras 22 dont l'extrémité distale 23, située à distance de l'axe 3, est équipée de la masse pesante 5.

Le bras 22 s'étend radialement par rapport à l'arbre de roue 31. La masse pesante 5 est montée fixe au niveau de l'extrémité distale 23 de ce bras radial 22.
La masse pesante 5 est ici unique, mais on peut envisager une pluralité de masses assemblées entre elles.

De la sorte, on peut considérer que la masse pesante 5 est montée fixe au niveau de la zone de périphérie 24 de la structure de roue 2.

Cette masse pesante 5 est de préférence réalisée en métal (acier, plomb...).

Elle se présente ici sous la forme d'un bloc comprenant deux faces planes latérales parallèles et un contour annulaire allongé ; mais elle peut prendre d'autres formes et peut être constituée de plusieurs modules de préférence rapprochés les uns des autres.

Dans le mode de réalisation illustré sur les figures 1 et 2, la motorisation de manoeuvre de roue 6 et la génératrice électrique 8 sont portées par les poutres verticales 42 du support de roue 4, dans le prolongement de l'arbre de rotation 31.

La motorisation de manoeuvre de roue 6 est montée d'un côté de la structure de roue 2 et sa sortie est en prise avec l'arbre de roue 31 par l'intermédiaire des moyens de transmission 7 en forme d'un embrayage électromagnétique.

Cette motorisation de manoeuvre de roue 6 peut consister en un motoréducteur électrique de type servomoteur couplé à un réducteur planétaire.

La génératrice électrique 8 est montée de l'autre côté de la roue 2 et son axe est en prise avec l'arbre de roue 31 par l'intermédiaire des moyens de transmission 9 en forme d'une boite d'engrenages multiplicateur.

La génératrice électrique 8 peut consister en un alternateur 800ATK4M1C0100 à aimants permanents qui peut produire de 0 à 22 KW en fonction de sa vitesse.

De préférence, l'énergie électrique nécessaire au fonctionnement de la motorisation de manœuvre de roue 6 provient des moyens d'accumulation d'énergie électrique 10, lesquels reçoivent un complément de charge par une alimentation électrique externe, par exemple le secteur.

Les différents éléments constitutifs des moyens de transmission 7 de la motorisation de manœuvre de roue 6 sont adaptés pour obtenir une vitesse de rotation choisie de la structure de roue 2.

De leur côté, les différents éléments constitutifs des moyens de transmission 9 sont adaptés pour faire tourner l'axe de la génératrice électrique 8 à une vitesse choisie, de préférence à sa vitesse nominale (c'est-à-dire à la vitesse à laquelle elle délivre sa puissance maximale).

Un module électronique (non représenté) constitue des moyens de commande adaptés pour gérer le fonctionnement de l'équipement 1.

En particulier, ce module électronique est configuré/programmé pour gérer le fonctionnement de la motorisation de manœuvre de roue 6 de sorte, après initiation du mouvement, à stabiliser la rotation de la structure de roue 2 à une valeur prédéfinie (adaptée à la vitesse nominale recherchée pour la génératrice électrique 8).

De plus, ce module électronique est adapté pour permettre la mise en marche et l'arrêt de la motorisation de manœuvre de roue 6 (et donc de la structure de roue 2) en fonction du niveau de charge des moyens d'accumulation d'énergie électrique 10. La motorisation de manœuvre de roue 6 ne pourra démarrer qu'à partir d'un certain niveau de charge des moyens d'accumulation d'énergie électrique 10 (par exemple 30%) ; et elle s'arrêtera également à partir de l'atteinte d'un certain niveau de charge (par exemple 100%).

Egalement, ce module électronique est adapté pour arrêter la structure de roue 2 avec la masse pesante 5 positionnée en partie haute à la verticale de l'axe 3, de manière à faciliter la remise en marche de la structure de roue 2 du fait de la gravité.

Pour cela, l'équipement 1 comporte avantageusement des moyens de freinage/verrouillage 13 qui consistent ici en un dispositif de freinage à disque, comprenant - une mâchoire 131 portée par le support 4, et - un disque 132 porté par l'arbre de roue 31.

La gestion de ces moyens de verrouillage 13 par le module électronique est assistée par un codeur 14 actionné par l'arbre de roue 31 via une courroie de transmission 141.

Ce codeur 14 permet de connaître de manière précise la position de la masse pesante 5, ainsi que la vitesse de rotation de la structure de roue 2.

Par exemple : Le poids de la masse pesante 5 peut être de l'ordre de 600 kg, et sa distance par rapport à l'axe de l'ordre de 1,50 m, ce qui correspond à un couple d'environ 9000 newton-mètre.

La motorisation de manœuvre de roue 6 ainsi que le module électronique gèrent l'équipement de façon à ce que la masse pesante 5 tombe en chute libre à une vitesse d'environ 40 tr/min. A cette vitesse, la génératrice électrique produit plus de 5 kW et crée un couple résistif d'environ 2100 newton-mètre.

La structure de roue 2 étant à l'arrêt, avec sa masse pesante 5 positionnée en partie haute à la verticale de l'axe de rotation 3, la motorisation de manœuvre de roue 6 peut être mise en marche pour faire tourner la structure de roue 2. L'initiation de la rotation est favorisée par le poids de la masse pesante 5.

La structure de roue 2 est accélérée, puis stabilisée en vitesse de sorte que la génératrice électrique 8 tourne à sa vitesse nominale et produise un courant électrique assurant la charge des moyens d'accumulation d'énergie électrique 10.

L'unique masse pesante 5 fait ainsi office de balourd à l'extrémité du bras 22, auquel viennent se combiner l'effet de l'inertie et celui de la force centrifuge.

La génératrice électrique 8 tourne alors à sa vitesse nominale ainsi qu'à son couple nominal, avec une faible consommation de la motorisation de manœuvre de roue 6.

La motorisation de manœuvre de roue 6 est stoppée lorsque les moyens d'accumulation d'énergie électrique 10 sont complétement chargés.

En cours de charge, ou ensuite, les moyens d'accumulation d'énergie électrique 10 peuvent être utilisés pour toute alimentation électrique choisie, par exemple au sein d'une habitation ou autre.

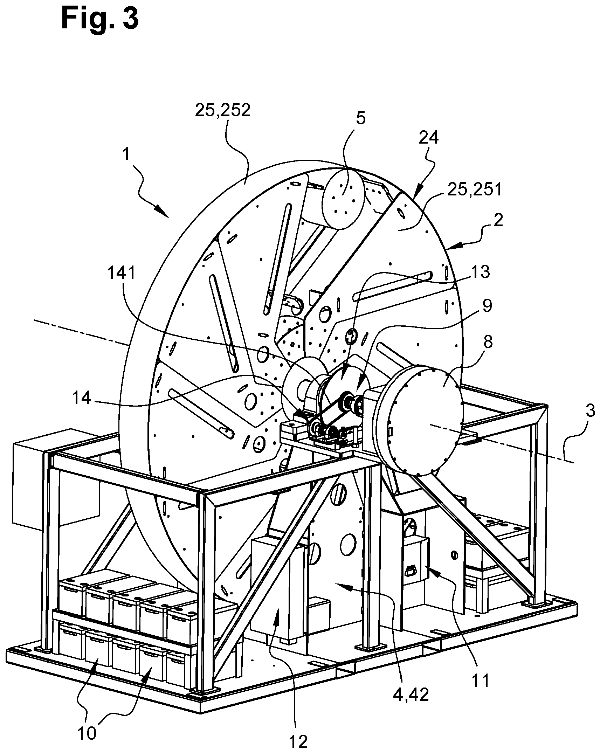

On a représenté sur la figure 3 une autre forme de réalisation possible d'un équipement 1 conforme à l'invention, qui se distingue du mode de réalisation décrit en relation avec les figures 1 et 2 par la configuration de la structure de roue 2.

La structure de roue 2 comprend ici un châssis mécano-soudé de forme générale cylindrique sur lequel est rapporté un carénage périphérique 25 adapté pour minimiser les frottements à l'air. Le carénage 25 est ici constitué - de deux flasques latéraux 251, en forme générale de disques, qui s'étendent dans un plan vertical, parallèlement l'un à l'autre, et - d'une virole cylindrique périphérique 252.

Les flasques latéraux 251 et la virole périphérique 252 peuvent être réalisés en une ou plusieurs pièces.

La structure de roue 2 porte la masse pesante 5 dans sa zone de périphérie 24, c'est-à-dire à distance de l'axe 3, protégée par le carénage 25.

La masse pesante 5 est unique ; elle est de préférence réalisée en métal (acier, plomb...) et elle se présente ici sous une forme cylindrique interposée entre les deux flasques 251. Cette masse pesante 5 est fixe par rapport au châssis de la structure de roue 2, solidarisée avec ce dernier par tout moyen approprié.

En variante la masse pesante 5 peut prendre d'autres formes et peut être constituée de plusieurs modules de préférence rapprochés les uns des autres.

Les autres éléments constitutifs de l'équipement 1 de la figure 3, et son mode de fonctionnement, sont identiques ou similaires à ceux décrits en relation avec les figures 1 et 2.

## Revendications

1. Equipement pour réseau électrique, adapté au stockage d'énergie sous forme d'énergie potentielle de pesanteur et à la restitution de ladite énergie potentielle de pesanteur sous la forme d'énergie électrique,
lequel équipement (1) comprend :
- une structure de roue (2) munie d'un arbre rotatif (31) présentant un axe de rotation horizontal (3),
- des moyens (5, 6) pour la mise en rotation de ladite structure de roue (2) autour dudit axe de rotation horizontal (3), lesquels moyens (5, 6) comprennent (i) au moins une masse pesante (5) portée par ladite structure de roue (2) de manière adaptée pour assurer son déséquilibrage par rapport audit axe de rotation (3), et (ii) une motorisation de manoeuvre de roue (6) associée à des moyens de transmission (7),
- une génératrice électrique (8), comprenant un rotor entrainé en rotation par ledit arbre rotatif (31) pour la production d'énergie électrique à partir de la rotation de ladite structure de roue (2) et,
- des moyens d'accumulation d'énergie électrique (10), en forme d'une ou de plusieurs batteries, qui sont alimentés en électricité par ladite génératrice électrique (8),
**caractérisé en ce que** lesdits moyens (5, 6) pour la mise en rotation de ladite structure de roue (2) sont adaptés pour mettre en rotation ladite structure de roue (2) toujours dans le même sens de rotation.

2. Equipement selon la revendication 1, **caractérisé en ce que** ladite au moins une masse pesante (5) consiste en une masse pesante unique.

3. Equipement selon l'une quelconque des revendications 1 ou 2, **caractérisé en ce que** ladite au moins une masse pesante (5) est montée fixe sur ladite structure de roue (2).

4. Equipement selon la revendication 3, **caractérisé en ce que** ladite structure de roue (2) comporte une zone de périphérie (24) située à distance dudit axe de rotation horizontal (3), et **en ce que** ladite au moins une masse pesante (5) est montée fixe au niveau de ladite zone de périphérie (24).

5. Equipement selon la revendication 4, **caractérisé en ce que** ladite structure de roue (2) est de forme générale cylindrique et comporte un carénage périphérique (25, 251, 252) adapté pour minimiser les frottements à l'air.

6. Equipement selon la revendication 3, **caractérisé en ce que** ladite structure de roue (2) comprend un bras (22) s'étendant radialement par rapport audit arbre rotatif (31), et à l'extrémité distale duquel ladite au moins une masse pesante (5) est montée fixe.

7. Equipement selon l'une quelconque des revendications 1 à 6, **caractérisé en ce que** ladite motorisation de manœuvre de roue (6) est de type électrique, et **en ce que** lesdits moyens d'accumulation d'énergie électrique (10) sont adaptés pour servir au moins partiellement de moyen d'alimentation électrique pour ladite motorisation de manœuvre de roue (6).

8. Equipement selon la revendication 7, **caractérisé en ce qu'**il comporte des moyens de commande adaptés pour la mise en marche et l'arrêt de ladite motorisation de manœuvre de roue (6) en fonction de la charge desdits moyens d'accumulation d'énergie électrique (10).

9. Equipement selon l'une quelconque des revendications 1 à 8, **caractérisé en ce qu'**il comporte des moyens de commande de ladite motorisation de manœuvre de roue (6) adaptés pour mettre à l'arrêt ladite structure de roue (2) en positionnant ladite au moins une masse pesante (5) en partie supérieure de ladite structure de roue (2), à la verticale ou sensiblement à la verticale de l'axe de rotation (3) de ladite structure de roue (2), afin de faciliter sa mise en rotation du fait de la gravité.

10. Procédé pour animer en rotation un équipement (1) selon l'une quelconque des revendications 1 à 9, **caractérisé en ce qu'**il consiste :
- à mettre à l'arrêt ladite structure de roue (2) en positionnant ladite au moins une masse pesante (5) en partie supérieure de ladite structure de roue (2), à la verticale ou sensiblement à la verticale de l'axe de rotation (3) de ladite structure de roue (2), afin de faciliter sa mise en rotation du fait de la gravité, et
- à mettre en marche de ladite motorisation de manœuvre de roue (6) pour entrainer ladite structure de roue (2) en rotation.

## Patentansprüche

1. Vorrichtung für ein elektrisches Netzwerk, die für eine Speicherung von Energie in Form von Gravitationspotentialenergie und die Rückgewinnung der Gravitationspotentialenergie in Form von elektrischer Energie ausgelegt ist, wobei die Vorrichtung (1)
- eine Radstruktur (2) mit einer drehenden Welle (31), die eine horizontale Drehachse (3) hat,
- Mittel (5, 6) zum in Drehung Versetzen der Radstruktur (2) um die horizontale Drehachse (3), wobei die Mittel (5, 6) (i) mindestens eine von der Radstruktur (2) so getragene Gewichtsmasse (5), daß deren Ungleichgewicht in Bezug auf die Drehachse (3) sichergestellt ist, und (ii) eine mit Übertragungsmitteln (7) verbundene Radbetätigungsmotorisierung (6) aufweisen,
- einen elektrischen Generator (8) mit einem durch die drehende Welle (31) drehend angetriebenen Rotor für die Erzeugung elektrischer Energie aus der Drehung der Radstruktur (2) und
- Mittel zum Sammeln elektrischer Energie (10) in Form von einer oder mehreren Batterien, die durch den elektrischen Generator (8) mit Elektrizität versorgt werden,
aufweist,
**dadurch gekennzeichnet, daß** die Mittel (5, 6) zum in Drehung Versetzen der Radstruktur (2) dazu ausgelegt sind, die Radstruktur (2) immer im selben Drehsinn in Drehung zu versetzen.

2. Vorrichtung gemäß Anspruch 1, **dadurch gekennzeichnet, daß** die mindestens eine Gewichtsmasse (5) aus einer einzigen Gewichtsmasse besteht.

3. Vorrichtung gemäß einem der Ansprüche 1 oder 2, **dadurch gekennzeichnet, daß** die mindestens eine Gewichtsmasse (5) an der Radstruktur (2) fest angebracht ist.

4. Vorrichtung gemäß Anspruch 3, **dadurch gekennzeichnet, daß** die Radstruktur (2) eine von der horizontalen Drehachse (3) entfernt angeordnete Randzone (24) aufweist und daß die mindestens eine Gewichtsmasse (5) in Höhe der Randzone (24) fest angebracht ist.

5. Vorrichtung gemäß Anspruch 4, **dadurch gekennzeichnet, daß** die Radstruktur (2) eine im Wesentlichen zylindrische Form hat und eine zum Reduzieren der Luftreibung ausgelegte Umfangsverkleidung (25, 251, 252) aufweist.

6. Vorrichtung gemäß Anspruch 3, **dadurch gekennzeichnet, daß** die Radstruktur (2) einen sich in Bezug auf die drehende Welle (31) radial erstreckenden Arm (22) aufweist, an dessen distalem Ende die mindestens eine Gewichtsmasse (5) fest angebracht ist.

7. Vorrichtung gemäß einem der Ansprüche 1 bis 6, **dadurch gekennzeichnet, daß** die Radbetätigungsmotorisierung (6) elektrisch ist und daß die Mittel zum Sammeln elektrischer Energie (10) dazu ausgelegt sind, mindestens teilweise als Stromversorgungsmittel für die Radbetätigungsmotorisierung (6) zu dienen.

8. Vorrichtung gemäß Anspruch 7, **dadurch gekennzeichnet, daß** sie Steuerungsmittel aufweist, die für das in Bewegung Setzen und Anhalten der Radbetätigungsmotorisierung (6) in Abhängigkeit vom Ladezustand der Mittel zum Sammeln elektrischer Energie (10) ausgelegt sind.

9. Vorrichtung gemäß einem der Ansprüche 1 bis 8, **dadurch gekennzeichnet, daß** sie Steuerungsmittel für die Radbetätigungsmotorisierung (6) aufweist, die dazu ausgelegt sind, die Radstruktur (2) anzuhalten, indem die mindestens eine Gewichtsmasse (5) im oberen Teil der Radstruktur (2) senkrecht oder im Wesentlichen senkrecht über der Drehachse (3) der Radstruktur (2) positioniert wird, um deren gravitationsbedingtes in Drehung Versetzen zu erleichtern.

10. Verfahren zur drehenden Betätigung einer Vorrichtung gemäß einem der Ansprüche 1 bis 9, **dadurch gekennzeichnet, daß** es darin besteht,
- die Radstruktur (2) anzuhalten, indem die mindestens eine Gewichtsmasse (5) im oberen Teil der Radstruktur (2) senkrecht oder im Wesentlichen senkrecht über der Drehachse (3) der Radstruktur (2) positioniert wird, um deren gravitationsbedingtes in Drehung Versetzen zu erleichtern, und
- die Radbetätigungsmotorisierung (6) in Gang zu setzen, um die Radstruktur (2) drehend anzutreiben.

## Claims

1. Apparatus for electrical networks, which apparatus is suitable for storing energy in the form of gravitational potential energy and for restoring the gravitational potential energy in the form of electrical energy,
said apparatus (1) comprising:
- a wheel structure (2) provided with a rotatable shaft (31) having a horizontal rotation axis (3),
- means (5, 6) for putting the wheel structure (2) in rotation around said horizontal rotation axis (3), said means (5, 6) comprising (i) at least one heavy mass (5) carried by the wheel structure (2) in an appropriate manner to assure its imbalance in relation to the rotation axis (3) and (ii) a wheel maneuvering motorization (6) connected to transmission means (7),
- an electric generator (8) comprising a rotor rotationally driven by said rotatable shaft (31) for producing electric energy by the rotation of said wheel structure (2) and
- means for storing electric energy (10) in the form of one or several batteries which are supplied with electricity by the electric generator (8),
**characterized in that** the means (5, 6) for putting the wheel structure (2) in rotation are adapted for putting the wheel structure (2) in rotation always in the same direction of rotation.

2. Apparatus according to claim 1, **characterized in that** the at least one heavy mass (5) consists of a unique heavy mass.

3. Apparatus according to any one of claims 1 or 2, **characterized in that** said at least one heavy mass (5) is fixedly mounted on said wheel structure (2).

4. Apparatus according to claim 3, **characterized in that** said wheel structure (2) comprises a peripheral zone (24) located at a distance from said horizontal rotation axis (3) and **in that** said at least one heavy mass (5) is fixedly mounted at the peripheral zone (24).

5. Apparatus according to claim 4, **characterized in that** said wheel structure (2) has an overall cylindrical shape and comprises a peripheral cover (25, 251, 252) suitable for minimizing friction by the air.

6. Apparatus according to claim 3, **characterized in that** said wheel structure (2) comprises an arm (22) extending radially with respect to said rotatable shaft (31) and having at its distal end said at least one fixedly mounted heavy mass (5).

7. Apparatus according to any one of claims 1 to 6, **characterized in that** said wheel maneuvering motorization (6) is of the electric type and **in that** the means for storing electric energy (10) are suitable for serving at least partially as means for providing electricity for the wheel maneuvering motorization (6).

8. Apparatus according to claim 7, **characterized in that** it comprises control means for starting and stopping the wheel maneuvering motorization (6) depending on the charge of said means for storing electric energy (10).

9. Apparatus according to any one of claims 1 to 8, **characterized in that** it comprises control means for the wheel maneuvering motorization (6) suitable for stopping said wheel structure (2) by positioning said at least one heavy mass (5) at the upper part of the wheel structure (2) vertically or essentially vertically to the rotation axis (3) of said wheel structure (2) in order to facilitate its putting into rotation by means of gravity.

10. Method of driving an apparatus according to any one of claims 1 to 9 in rotation, **characterized in that** it comprises:
- stopping said wheel structure (2) by positioning said at least one heavy mass (5) at the upper part of said wheel structure (2), vertically or essentially vertically to the rotation axis (3) of said wheel structure (2) in order to facilitate its putting into rotation by means of gravity, and
- starting said wheel maneuvering motorization (6) for driving said wheel structure (2) in rotation.
